# EUROPEAN PATENT APPLICATION

(11) **EP 2 624 549 A1**
(43) Date of publication of application: **07.08.2013**
(21) Application number: 11828912.3
(22) Date of filing: 22.09.2011
(51) Int. Cl.: H04N 7/173

(54) **INFORMATION PROCESSING DEVICE, INFORMATION PROCESSING METHOD, AND PROGRAM**

(30) Priority: 17.06.2011 US 201161498163 P; 01.10.2010 US 388999 P
(71) Applicant: Sony Corporation, Tokyo 108-0075 (JP)
(72) Inventor: KITAZATO Naohisa, Tokyo 108-0075 (JP)
(74) Representative: Horner, David Richard
(86) International application number: PCT/JP2011/071568
(87) International publication number: WO 2012/043355

(57) **Abstract**

The present invention relates to an information processing device, an information processing method, and a program that can provide link-type content having a wide variety of scenarios.

A control information acquirer acquires control information including an absolute clock time event that occurs at specific date and time on the time axis of a scenario as an event for transition from the present scenario to another scenario. In accordance with the acquired control information, a reproduction controller controls reproduction of link-type content so that the present scenario may be caused to transition to another scenario if the absolute clock time event occurs. The present technique can be applied to a content reproduction device that reproduces content for example.

## Description

### [Technical Field]

The present technique relates to information processing devices, information processing methods, and programs, and particularly to an information processing device, an information processing method, and a program that allow provision of link-type content having a wide variety of scenarios.

### [Background Art]

Conventionally, in the case of watching a broadcast program, it is general to select the desired broadcast channel after viewing a program listing. Furthermore, in the on-demand streaming in the IPTV (Internet Protocol Television), which has been becoming popular in recent years, normally watching is performed by selecting content from a content list.

It is recognized that a combined technique of broadcasting and communication is necessary to achieve sophistication of the broadcast service, and various measures to switch service of broadcasting and communication have been proposed in order to make them be in cooperation. However, presently service taking full advantage of the characteristics of each of them has not yet been realized. Furthermore, for example in the world of game, a multimedia engine is implemented in a terminal device and plural streams formed of plural time axes are reproduced in linkage by execution of a programming language. If this is applied also to content other than the game, link-type content can be provided.

However, it takes high cost to implement a complicated multimedia engine. Thus, high-function expression capability provided by the multimedia engine is unnecessary for content that does not need so complicated processing as that for the game. Therefore, for example PTL 1 discloses a technique in which processing of reproduction of different content, end, and so forth is executed in a reproduction branch screen of a moving image file according to user operation.

### [Citation List]

### [Patent Literature]

### [PTL 1]

JP 2008-113247A

### [Summary]

### [Technical Problem]

However, in the technique disclosed in PTL 1, only user operation for simply causing transition from one piece of content to another piece of content is defined and only simple transition can be realized. Thus, a wide variety of scenarios cannot be provided. Therefore, it is required that link-type content having a wide variety of scenarios is provided e.g. by using a combined technique of broadcasting and communication.

The present technique is made in view of such circumstances and is to allow provision of link-type content having a wide variety of scenarios.

### [Solution to Problem]

An information processing device of one aspect of the present technique includes a content acquirer that acquires link-type content including a plurality of scenarios composed of content data and control information for controlling reproduction of the content data, a control information acquirer that acquires the control information, and a reproduction controller that controls reproduction of the link-type content by reproducing the content data in accordance with the control information. The control information acquirer acquires the control information including an absolute clock time event that occurs at specific date and time on the time axis of a scenario as an event for transition from the present scenario to another scenario. The reproduction controller causes the present scenario to transition to another scenario if the absolute clock time event occurs.

The control information acquirer acquires the control information including, as the event, the absolute clock time event that occurs only at a time event that is a predetermined time zone separated by a start point and an end point on the time axis of the scenario, and the reproduction controller causes the present scenario to transition to another scenario if the absolute clock time event occurs in the predetermined time zone.

The information processing device further includes a receiver that receives broadcast content broadcast via a broadcast network, and a display controller that switches content for displaying another scenario to which transition from the present scenario is caused from the link-type content to the broadcast content if the absolute clock time event occurs.

The control information acquirer acquires the control information including information for identifying the broadcast content, and the display controller displays the broadcast content received in accordance with the control information.

If the absolute clock time event occurs, the reproduction controller forcibly causes transition from the present scenario to another scenario.

If the absolute clock time event occurs, the reproduction controller causes transition from the present scenario to another scenario when an order is made by user operation.

The information processing device may be an independent device or may be an internal block configuring one device.

An information processing method or a program of one aspect of the present technique is an information processing method or a program corresponding to the above-described information processing device of one aspect of the present technique.

In the information processing device, the information processing method, and the program of one aspect of the present technique, the link-type content including plural scenarios composed of the content data and the control information for controlling reproduction of the content data is acquired, and reproduction of the link-type content is controlled by reproducing the content data in accordance with the control information. The control information including the absolute clock time event that occurs at specific date and time on the time axis of the scenario is acquired as the event for transition from the present scenario to another scenario, and the present scenario is caused to transition to another scenario if the absolute clock time event occurs.

### [Advantageous Effect of Invention]

According to one aspect of the present technique, link-type content having a wide variety of scenarios can be provided.

### [Brief Description of Drawings]

FIG. 1 is a diagram showing the difference point between normal content and link-type content.
FIG. 2 is a diagram showing the configuration of the normal content.
FIG. 3 is a diagram showing the configuration of the link-type content.
FIG. 4 is a diagram showing cooperation of broadcast content and the link-type content.
FIG. 5 is a diagram showing a configuration example of a content reproduction system.
FIG. 6 is a diagram showing a configuration example of a content reproduction device.
FIG. 7 is a diagram showing a configuration example of a control section.
FIG. 8 is a diagram for explaining constituent elements in the link-type content.
FIG. 9 is a diagram showing a configuration example of VSI information.
FIG. 10 is a table showing one example of the detailed specification (scenario) of the VSI.
FIG. 11 is a table showing one example of the detailed specification (event part) of the VSI.
FIG. 12 is a table showing one example of the detailed specification (bridge part) of the VSI.
FIG. 13 is a table showing one example of the detailed specification (branch part) of the VSI.
FIG. 14 is a diagram for explaining a broadcast scenario classified depending on the media type.
FIG. 15 is a diagram for explaining a time event.
FIG. 16 is a diagram for explaining a space event.
FIG. 17 is a diagram for explaining a time-space event.
FIG. 18 is a diagram for explaining an absolute clock time event.
FIG. 19 is a diagram for explaining cooperation of the link-type content and the broadcast content.
FIG. 20 is a diagram for explaining an auto-event.
FIG. 21 is a diagram showing one example of a bridge screen.
FIG. 22 is a diagram showing one example of a scenario of content.
FIG. 23 is a sequence diagram showing the operation of the example of the scenario of FIG. 22.
FIG. 24 is a flowchart for explaining link-type content reproduction processing.
FIG. 25 is a flowchart for explaining the link-type content reproduction processing.
FIG. 26 is a diagram showing one example of user experience realized by the content reproduction system.
FIG. 27 is a diagram showing a configuration example of a computer.

### [Description of Embodiments]

An embodiment of the present technique will be described below with reference to the drawings.

### [Comparison between Normal Content and Link-type Content]

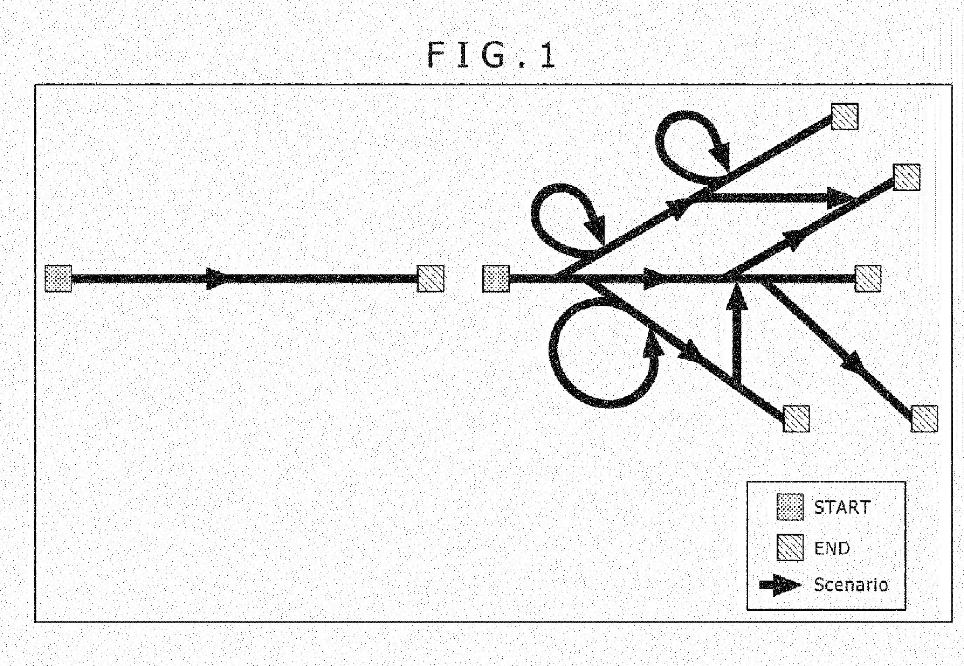

First, with reference to FIG. 1 to FIG. 3, common point and difference point between normal content and link-type content will be described. As shown on the left side of FIG. 1, the normal content is configured by a stream of a single time axis formed of one start point and one end point. In contrast, as shown on the right side of FIG. 1, the link-type content is configuring by linking plural streams of plural time axes. Furthermore, the link-type content includes plural scenarios configured by a stream of one time axis.

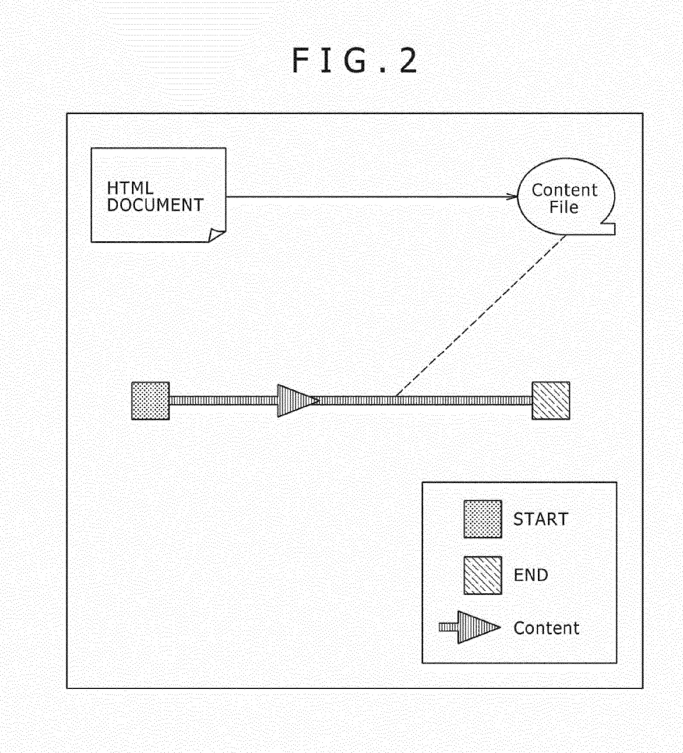

Specifically, as shown in FIG. 2, in the case of reproducing the normal content, the user selects the desired content from a content list provided based on an HTML (Hyper Text Markup Language) document and thereby reproduction of the content is started.

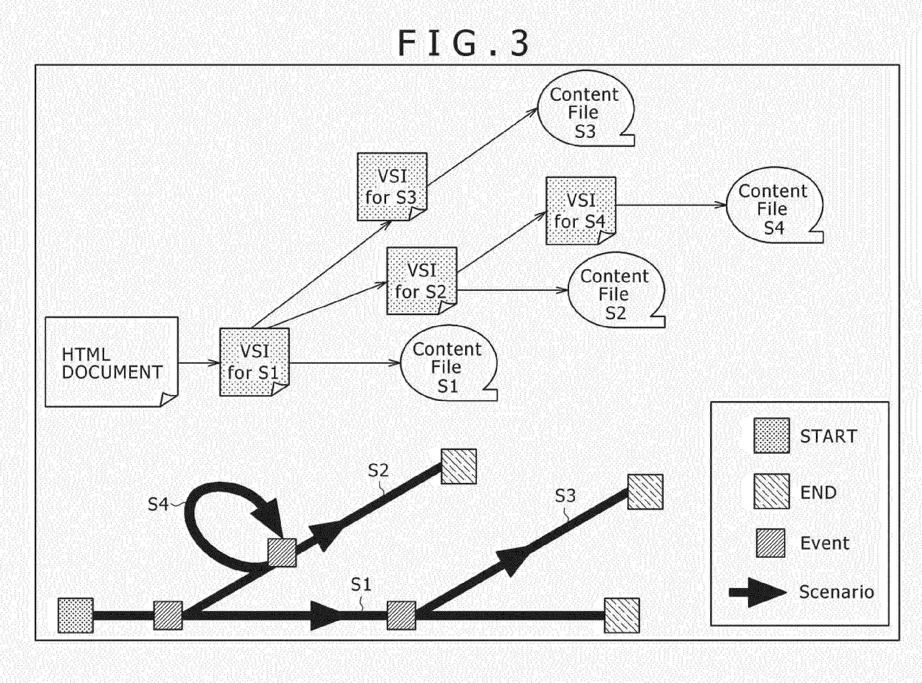

In contrast, as shown in FIG. 3, as for the link-type content, when the desired content is selected by the user from a content list provided based on an HTML document, first, VSI (Video Scenario Information) information that is control information of the scenario reproduced first in the selected content is acquired. Then, content data is reproduced in accordance with this VSI information. For example, even in the case of link from a scenario S1 to a scenario S2, the position of the VSI information of the scenario S2, described in the VSI information of the scenario S1, is referenced and the VSI information of the scenario S2 is acquired. Then, the content data of the scenario S2 is acquired in accordance with this VSI information of the scenario S2 and the content data is reproduced.

As above, one scenario is composed of one content data and the VSI information, which is control information for controlling reproduction of this content data. The detailed contents and so forth of the VSI information will be described later.

### [Cooperation of Link-type Content and Broadcast Content]

The above-described link-type content cooperates with broadcast content of a program, a CM, etc. to thereby become capable of providing a wide variety of scenarios.

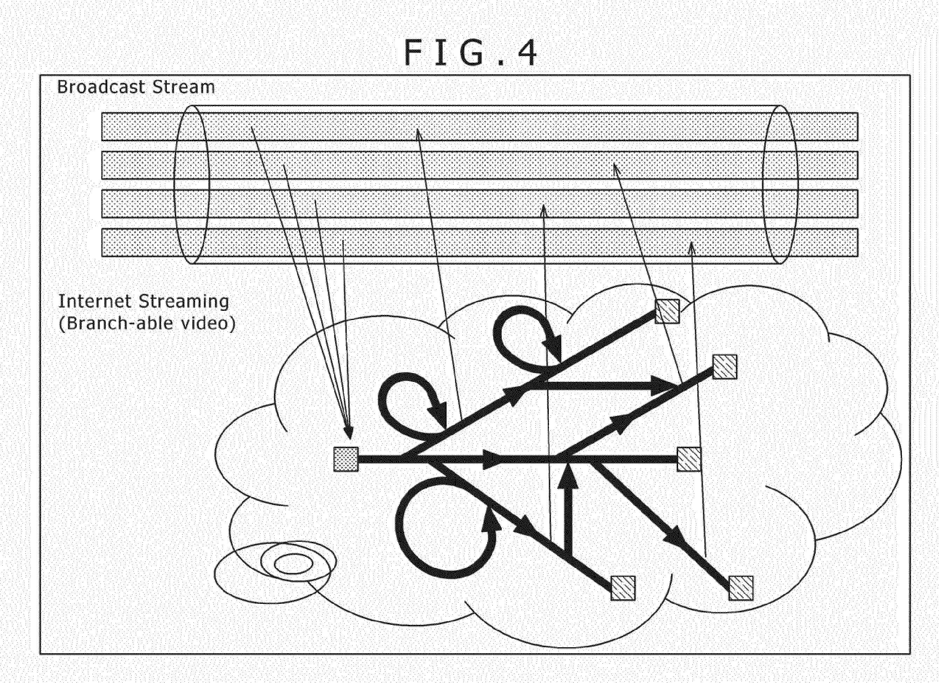

As shown in FIG. 4, broadcast content of a program and so forth is broadcast by a broadcast stream in which plural streams on a channel-by-channel basis are multiplexed. For example, by linking a certain program with link-type content subjected to streaming reproduction via the Internet, transition to the link-destination program can be caused in the reproduction of the link-type content and the program can be made to be watched. Furthermore, conversely, transition to the start timing of the link-type content may be caused in the middle of the program and the reproduction of the link-type content may be started. In this manner, by linking broadcast content and link-type content and making them be in cooperation and switchable to each other by using a combined technique of broadcasting and communication, it becomes possible to cause transition to not only streaming-reproduced content but also broadcast content and thus a wide variety of pieces of link-type content can be provided.

### [Configuration Example of Content Reproduction System]

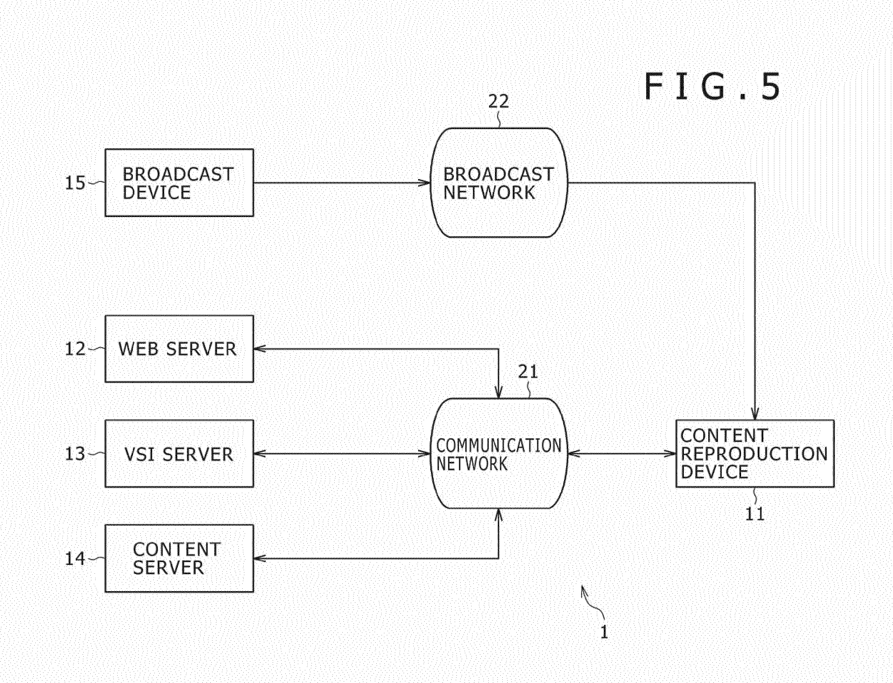

Next, with reference to FIG. 5 to FIG. 7, a content reproduction system capable of reproducing link-type content that can cooperate with broadcast content will be described.

FIG. 5 is a diagram showing a configuration example of the content reproduction system.

A content reproduction system 1 is composed of a content reproduction device 11, a Web server 12, a VSI server 13, a content server 14, and a broadcast device 15.

The content reproduction device 11 is e.g. an information processing device such as a personal computer, a television receiver, a home-use video processing device typified by a DVD recorder, a portable information terminal (PDA: Personal Digital Assistant), a cell-phone, a home-use or portable music reproduction device, or a home-use or portable game machine.

The content reproduction device 11 may exist as a single device or may be incorporated in e.g. a television receiver or a home-use video processing device.

The content reproduction device 11 is connected to the Web server 12, the VSI server 13, and the content server 14 via a communication network 21 and requests these servers to transfer various kinds of information to acquire information according to the request. The content reproduction device 11 reproduces the content data of link-type content acquired via the communication network 21.

Furthermore, the content reproduction device 11 includes a tuner. It receives a digital television broadcast signal broadcast from the broadcast device 15 via a broadcast network 22 to display video corresponding to the content data of broadcast content obtained from the broadcast signal and output audio thereof.

The Web server 12 is a dedicated server that provides a screen of a list of content reproduced by the content reproduction device 11 and so forth. The Web server 12 is connected to the content reproduction device 11 via the communication network 21 and generates a screen including a list of content provided by the content server 14 in response to a request from the content reproduction device 11 to provide it to the content reproduction device 11.

The VSI server 13 is a dedicated server that provides the VSI information, which is scenario-by-scenario control information possessed by link-type content. The VSI server 13 is connected to the content reproduction device 11 via the communication network 21 and provides the VSI information in response to a request from the content reproduction device 11.

The content server 14 is a dedicated server that provides the content data of the respective scenarios included in link-type content. The content server 14 is connected to the content reproduction device 11 via the communication network 21 and provides content data in response to a request from the content reproduction device 11.

The broadcast device 15 is so configured as to transmit a digital television broadcast signal via the broadcast network 22 such as a terrestrial digital broadcast network. Broadcast content of a program, a CM, etc. is broadcast by this digital television broadcast signal. The content reproduction system 1 is configured in the above-described manner.

### [Configuration Example of Content Reproduction Device]

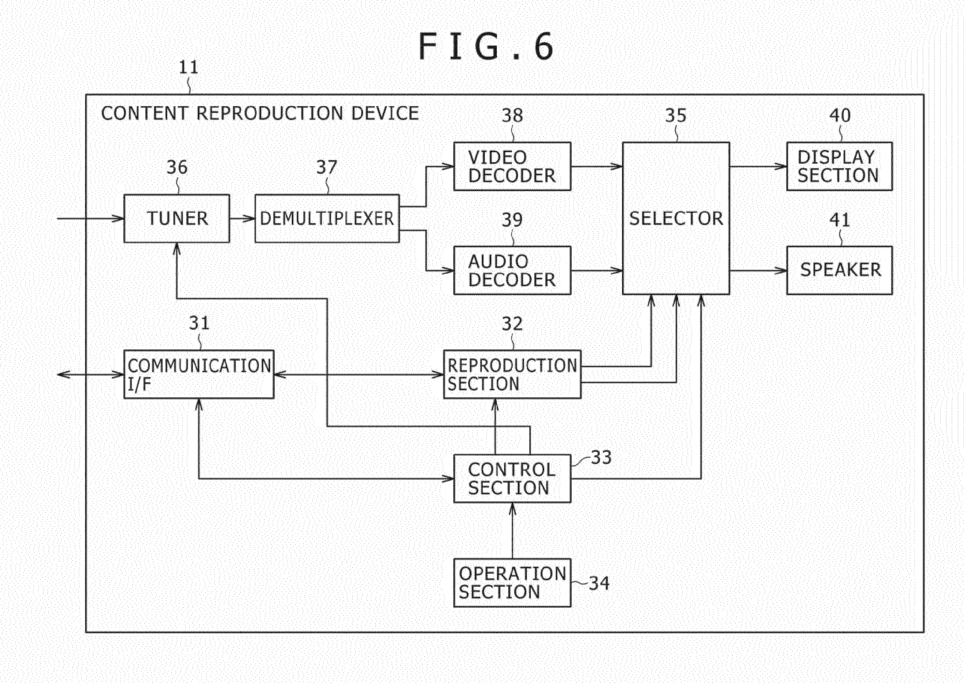

FIG. 6 is a diagram showing a configuration example of the content reproduction device in FIG. 5.

The content reproduction device 11 is composed of a communication I/F 31, a reproduction section 32, a control section 33, an operation section 34, a selector 35, a tuner 36, a demultiplexer 37, a video decoder 38, an audio decoder 39, a display section 40, and a speaker 41.

The communication I/F 31 connects to the Web server 12, the VSI server 13, or the content server 14 via the communication network 21 and receives a list screen of content, VSI information, or content data in accordance with control from the control section 33. The communication I/F 31 supplies the content data of the received data to the reproduction section 32 and supplies the list screen of content and the VSI information to the control section 33.

The reproduction section 32 connects to the content server 14 via the communication I/F 31 and the communication network 21 and requests streaming delivery of the content data of link-type content in accordance with control from the control section 33. The reproduction section 32 executes predetermined processing for reproducing the link-type content for the content data supplied from the communication I/F 31 and supplies a video signal and an audio signal obtained as a result to the selector 35.

The control section 33 controls the operation of the respective sections of the content reproduction device 11.

The control section 33 controls the reproduction section 32 in accordance with the VSI information supplied from the communication I/F 31. Furthermore, the control section 33 controls the selector 35 in accordance with the VSI information.

Moreover, the control section 33 supplies, to the selector 35, the list screen of content supplied from the communication I/F 31.

The details of the control section 33 will be described later.

The operation section 34 supplies an operation signal according to user operation to the control section 33. The control section 33 controls the operation of the respective sections of the content reproduction device 11 in response to the operation signal supplied from the operation section 34. In the case of using an input device

(not shown) such as a remote controller, an operation signal from the input device instead of the operation section 34 is supplied to the control section 33.

The tuner 36 receives and demodulates a digital television broadcast signal corresponding to the channel according to channel selection by the user or VSI information and supplies a multiplexed stream obtained as a result to the demultiplexer 37 in accordance with control from the control section 33.

The demultiplexer 37 separates an audio encoded signal and a video encoded signal from the multiplexed stream supplied from the tuner 36 and supplies the video encoded signal and the audio encoded signal to the video decoder 38 and the audio decoder 39, respectively.

The video decoder 38 decodes the video encoded signal supplied from the demultiplexer 37 and supplies a video signal obtained as a result to the selector 35.

The audio decoder 39 decodes the audio encoded signal supplied from the demultiplexer 37 and supplies an audio signal obtained as a result to the selector 35.

To the selector 35, the video signal and the audio signal from the reproduction section 32, the video signal from the video decoder 38, and the audio signal from the audio decoder 39 are supplied.

The selector 35 supplies the video signal as either one of the video signal from the reproduction section 32 and the video signal from the video decoder 38 to the display section 40 in accordance with control from the control section 33. Furthermore, the selector 35 supplies the audio signal as either one of the audio signal from the reproduction section 32 and the audio signal from the audio decoder 39 to the speaker 41 in accordance with control from the control section 33.

The display section 40 displays video corresponding to the video signal supplied from the selector 35.

The speaker 41 outputs audio corresponding to the audio signal supplied from the selector 35.

The content reproduction device 11 is configured in the above-described manner.

### [Configuration Example of Control Section]

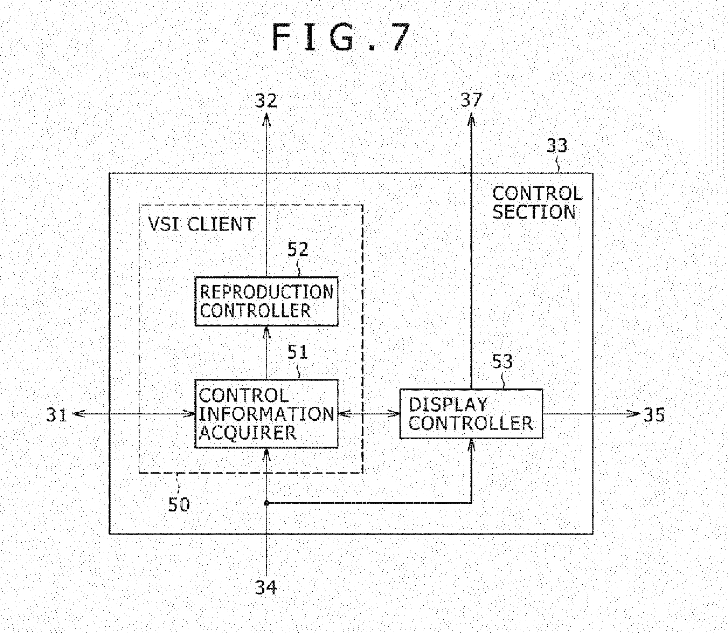

FIG. 7 is a diagram showing a configuration example of the control section in FIG. 6.

The control section 33 is composed of a control information acquirer 51, a reproduction controller 52, and a display controller 53.

The control information acquirer 51 acquires the VSI information supplied from the communication I/F 31 and supplies it to the reproduction controller 52 and the display controller 53. Specifically, at first, the control information acquirer 51 acquires the VSI information corresponding to link-type content according to user operation based on an operation signal supplied from the operation section 34. From then on, the control information acquirer 51 acquires the VSI information of the scenario specified in accordance with the VSI information.

In the case of transition to another scenario by an auto-event, the control information acquirer 51 automatically acquires the VSI information of the scenario specified by the VSI information. On the other hand, if the event is not an auto-event, the control information acquirer 51 acquires the VSI information corresponding to the specified scenario when the user specifies the scenario by using the operation section 34 or an input device. The auto-event as one kind of event will be described later.

The reproduction controller 52 controls the reproduction section 32 in accordance with the VSI information supplied from the control information acquirer 51 to thereby control reproduction of link-type content.

The display controller 53 controls the selector 35 in accordance with the VSI information supplied from the control information acquirer 51. Specifically, the display controller 53 switches the input destination of the selector 35 to the side of the reproduction section 32 when making the display section 40 display link-type content, and switches the input destination of the selector 35 to the side of the video decoder 38 and the audio decoder 39 when making the display section 40 display broadcast content. Furthermore, in the case of displaying broadcast content, the display controller 53 controls the tuner 36 to select the channel according to the VSI information.

Furthermore, the display controller 53 controls screen display of the display section 40. For example, based on an operation signal supplied from the operation section 34, the display controller 53 controls the communication I/F 31 via the control information acquirer 51 to connect to the Web server 12 via the communication network 21 and acquire a list screen of reproducible content. The display controller 53 supplies the acquired list screen of content to the selector 35 and makes the display section 40 display it.

The control section 33 is configured in the above-described manner.

A VSI client 50 to be described later is configured by the control information acquirer 51 and the reproduction controller 52.

### [Detailed Configuration of Link-type Content]

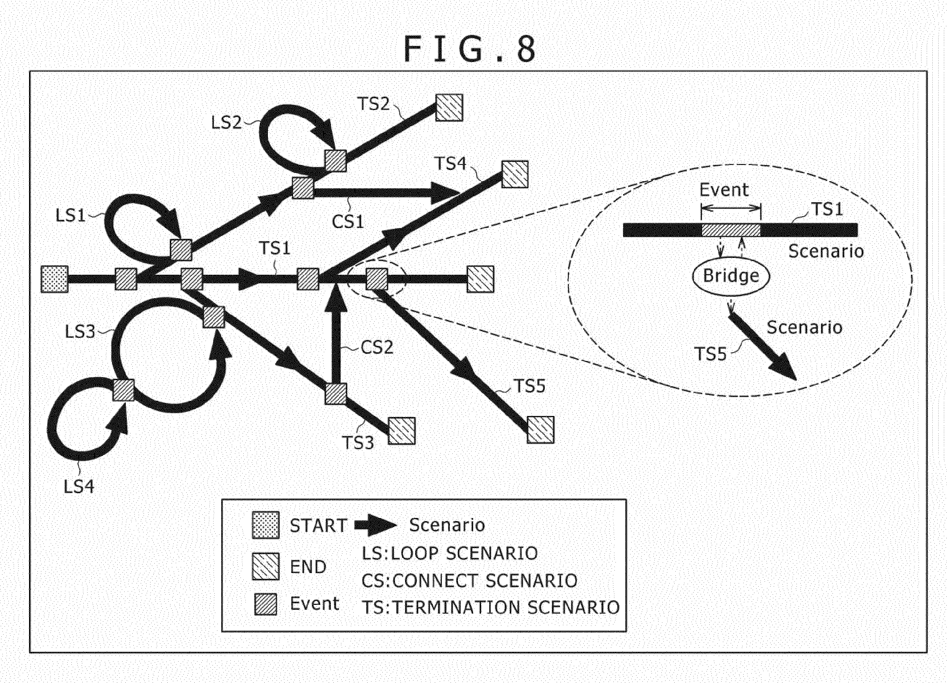

Next, with reference to FIG. 8 to FIG. 21, the detailed configuration of link-type content that is reproduced by the content reproduction device 11 and can cooperate with broadcast content will be described.

### [Definition of Terms]

First, the terms of constituent elements in the link-type content will be defined with reference to FIG. 8.

As shown in FIG. 8, the scenario (Scenario) is part of link-type content that comes into existence with one time axis and is normally one stream. The scenario is composed of one content file and one VSI file that is the metadata file of the content file and in which VSI information is described. The link-type content of FIG. 8 is composed of eleven scenarios TS1 to TS5, LS1 to LS4, CS1, and CS2 in the range from one start point to plural end points.

The scenarios included in the link-type content are classified into three types, i.e. loop scenario, connect scenario, and termination scenario, mainly from the behavior at the time of the scenario end. The loop scenario refers to a scenario that transitions from certain timing of a scenario and returns to the transition point of the same scenario again when the reproduction of the scenario ends as shown as the loop scenario LS in FIG. 8.

Furthermore, the connect scenario is a scenario that transitions to a scenario different from the transition source or to the scenario of the transition source but a different time position when the reproduction of the scenario ends as shown as the connect scenario CS in FIG. 8.

Moreover, the termination scenario is such a scenario as to end the reproduction of the link-type content when the scenario reproduction ends as shown as the termination scenario TS in FIG. 8.

As above, the scenario means one reproduction unit reproduced with a single time axis.

The event (Event) shows a partial zone of the time and space of the scenario and functions as a link for transition to another scenario.

It is a time position (time range) or a spatial position (space range) that is specified in the scenario and enables the transition to another scenario. In the link-type content of FIG. 8, plural events are specified in the middle of the scenarios in the range from one start point to plural end points and transition from the present scenario to another scenario is caused by the occurrence of the event. The bridge (Bridge) is a UI (User Interface) at the time of a scenario branch. In the bridge, operation of user confirmation as to whether or not to transition to another scenario, selection in the case in which plural scenarios are linked, and so forth and specifying of display of the whole screen are included. As shown by enlarging part of the link-type content of FIG. 8, when an event occurs in the middle of the termination scenario TS1, a bridge screen to the termination scenario TS5 is displayed, and transition from the termination scenario TS1 to the termination scenario TS5 is caused if the termination scenario TS5 is specified by user operation.

The branch (Branch) indicates the scenario of the transition destination with respect to the relevant scenario. In the link-type content of FIG. 8, for example, the scenarios TS2, TS3, TS4, and TS5 are branch scenarios from the viewpoint of the scenario TS1. Furthermore, LS1, CS1, and LS2 are branch scenarios from the viewpoint of TS2, which is a branch scenario from the viewpoint of TS1.

### [Configuration Example of VSI Information]

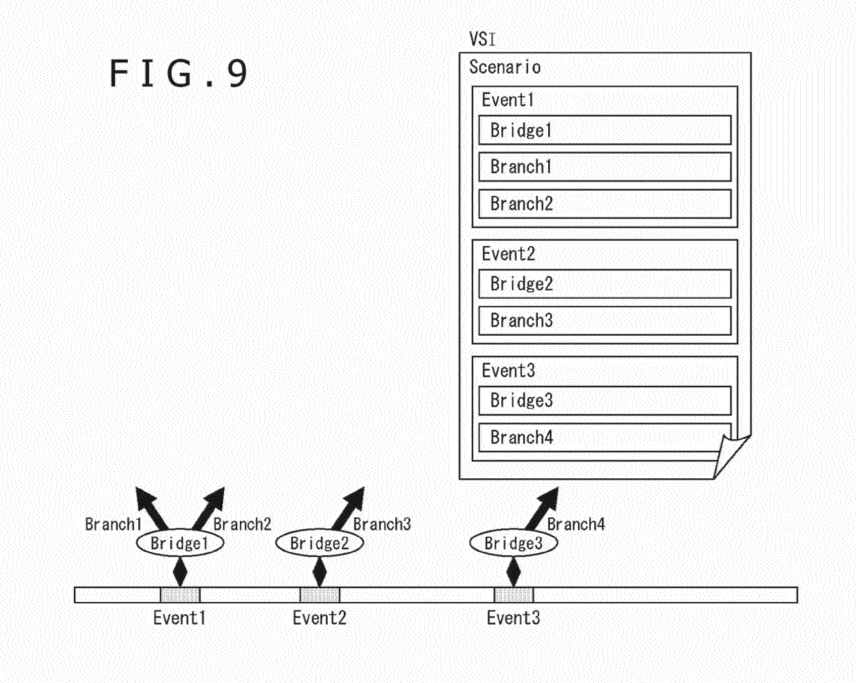

Next, the detailed contents of the VSI information will be described. As described above, the link-type content is so configured as to include plural scenarios composed of content data and VSI information, which is control information relating to reproduction of the content data. Here, as shown in FIG. 9, the VSI information is created on a scenario-by-scenario basis and is provided in the format of e.g. an XML (Extensible Markup Language) document.

The VSI information includes the information necessary for activation of reproduction of the relevant scenario (URL (Uniform Resource Locator) of content data of the relevant scenario and so forth), plural event elements relating to the event for transition from the present scenario to another scenario, a token element for user authentication, and so forth.

The event element includes at least one of time range and space range in which transition to a branch scenario is valid, a bridge element relating to the bridge that defines the user interface for transition to another scenario, and one or plural branch elements relating to the branch indicating another scenario.

The bridge element includes information that defines a UI at the time of a scenario branch.

The branch element includes the information necessary for transition to a branch scenario that branches from the relevant scenario (e.g. URL of VSI information of the branch scenario). The VSI information of the branch scenario also includes similar information. For example, the VSI information of the branch scenario may include information for transition to a branch scenario that further branches from the branch scenario.

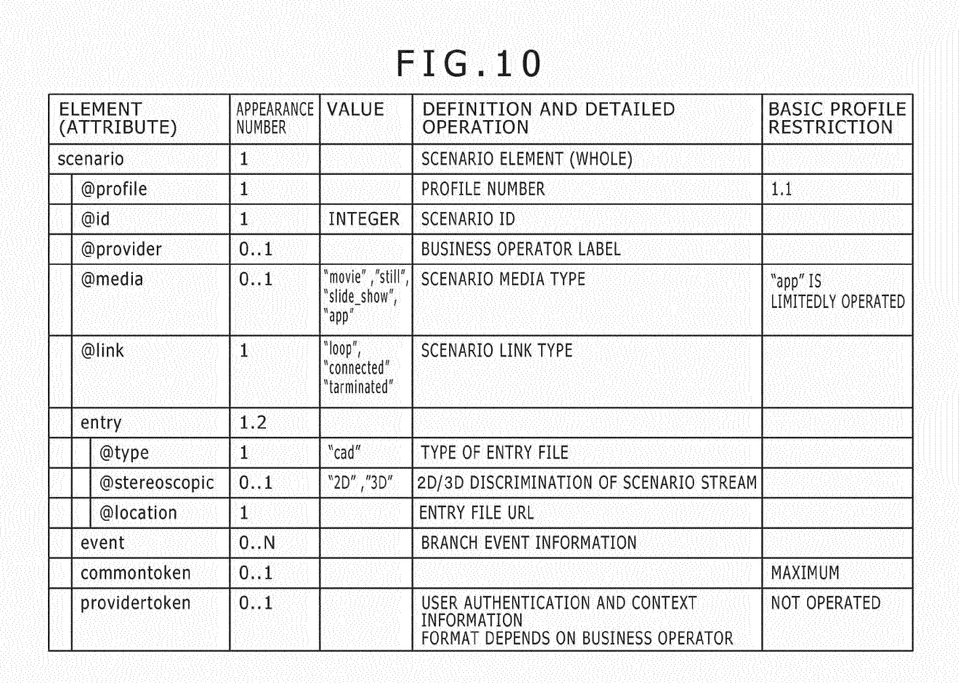

Here, the detailed specification of the VSI information is shown in FIG. 10 to FIG. 13. FIG. 10 is a table showing the whole specification of the VSI information.

The VSI information is created on a scenario-by-scenario basis and mainly includes metadata relating to the scenario, the event element relating to a branch event included in the scenario, and the token element.

As the metadata relating to the scenario, e.g. information for identifying the scenario, information for discriminating the business operator that provides the scenario, information for identifying the content data of the scenario, or information on the media type of the scenario is included. By giving the information on the media type of the scenario, the information on the media type is referenced and reproduction is controlled in the content reproduction device 11 and the content reproduction device 11 becomes compatible with plural media types.

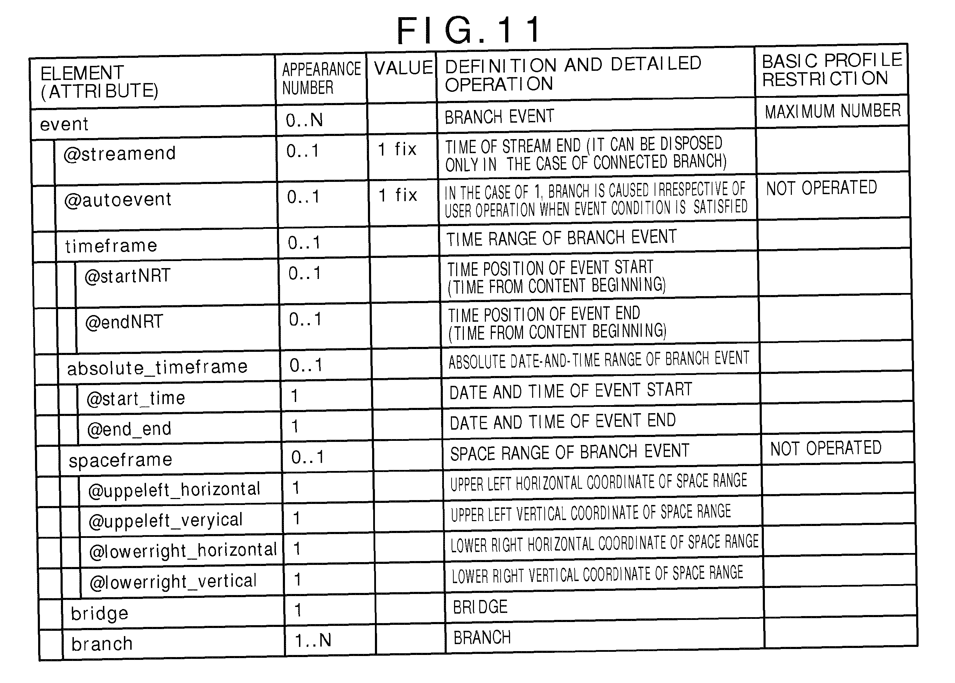

Furthermore, the event element included in the scenario is further defined by a specification shown in FIG. 11. The event element includes metadata relating to the event, the bridge element used in the event, and the branch element relating to a branch scenario to which transition from this event can be caused.

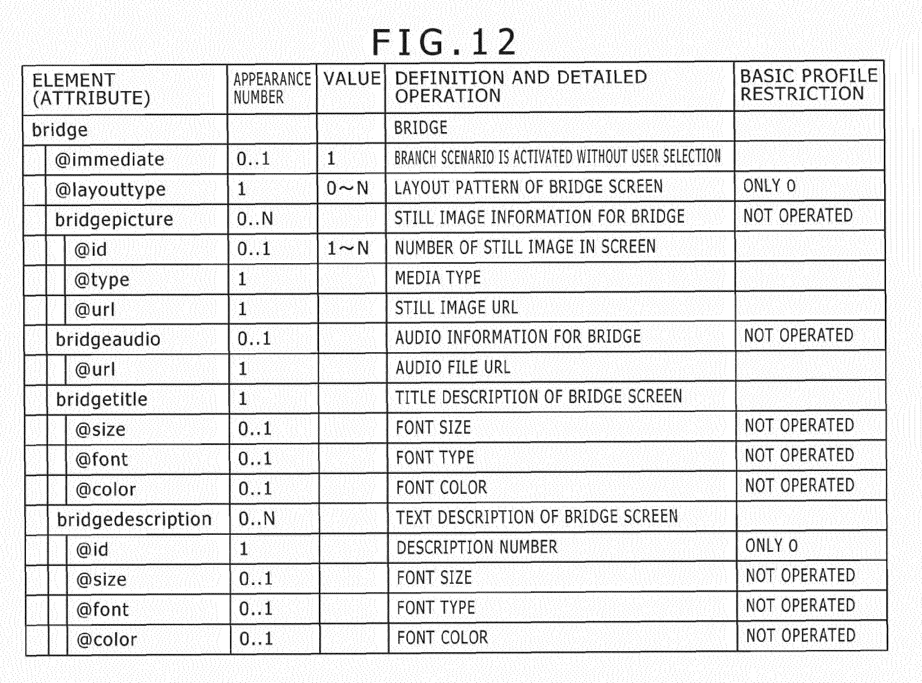

Moreover, the more detailed specification of the bridge element included in the event element is shown in FIG. 12. The bridge element is information that defines the user interface at the time of event activation. Therefore, the information necessary for displaying a bridge screen is included therein.

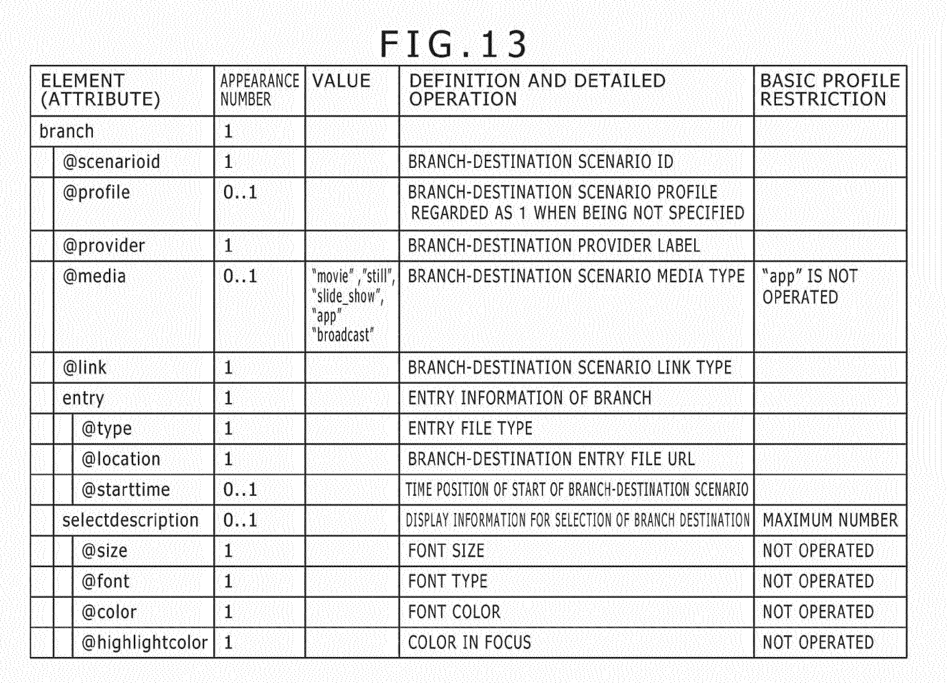

Furthermore, the more detailed specification of the branch element included in the event element is shown in FIG. 13. One or plural branch elements are included in the event element. Furthermore, information on the media type of the scenario and so forth is included in the branch element. By giving the information on the media type of the scenario, the media type of the scenario of the branch destination can be specified.

Although it is assumed that information on the font size, the font type, the font color, etc. relating to each branch in the bridge screen is included in the bridge element, the configuration is not limited thereto and these pieces of information may be included in the respective branch elements for example.

### [Kinds of Scenario]

Next, the kinds of scenario included in link-type content reproduced in the content reproduction device 11 will be described.

The link-type content reproduced in the content reproduction device 11 is configured by linking plural scenarios basically. At this time, as the content data of the respective scenarios, e.g. moving image, still image, slide show, application, and broadcast are used.

Reproduction of one scenario is continued from the start of reproduction of the content data of the scenario to branch, stop, or end of the content data. As operation of a remote controller in the scenario reproduction, e.g. Stop operation, Enter operation, Pause operation, FF operation, FR operation, Skip operation, and Play operation are assumed.

Stop operation is operation for stopping the reproduction. When this Stop operation is carried out, the reproduction of the link-type content is stopped and the screen returns to the screen displayed before the activation of the link-type content.

Enter operation is carried out to check a scenario branch in the event subject time range (or space range) for example. When Enter operation is carried out in the event subject time range or space range, a bridge screen is displayed.

Pause operation, FF operation, and FR operation are similar to those in normal content reproduction. That is, when Pause operation is carried out, reproduction of presently-reproduced content is suspended. Furthermore, FF operation and FR operation are options. If content is compatible with FF operation and FR operation, content under reproduction is fast-forwarded when FF operation is carried out and content under reproduction is rewound when FR operation is carried out. When Skip operation is carried out in content reproduction, the content is skipped to the scene of the start timing of the next event. Play operation is used for resume from Pause operation in scenario reproduction.

Furthermore, as described above, the content data of the scenario is classified based on the media type and moving image, still image, slide show, application, and broadcast are used for example.

The moving image scenario is configured by moving image content based on a moving image and audio. At this time, the moving image corresponds to at least one of 2D (Dimensions) content and 3D content. Furthermore, in reproduction of the moving image scenario, it is desirable to get out of this scenario by e.g. transition to the original scenario or end of the link-type content after the last picture of the moving image is displayed. Moreover, if an event is specified by VSI information, a bridge screen of another scenario specified is displayed by carrying out Enter operation in the subject time (or in the subject space) of the event.

The still image scenario is a scenario configured by one still image based on a format such as the JPEG (Joint Photographic Experts Group). When the still image scenario is reproduced, a still image as content data is displayed on the whole screen of the display section 40. The still image scenario can be applied to scenarios of all link types although classification based on the link type of the scenario will be described later. In the case of the still image scenario, getting out of the scenario is caused when the user carries out Enter operation in scenario reproduction. Furthermore, if an event is specified in the VSI information of the still image scenario, a bridge screen to another scenario specified is displayed by Enter operation carried out by the user.

The slide show scenario is configured by one or plural still images. When the slide show scenario is reproduced, a still image as content data is displayed on the whole screen of the display section 40. Then, display of the respective still images is sequentially switched at a time interval specified in advance. When the last still image included in the slide show content data is displayed, the reproduction of this scenario is ended by e.g. return to the original scenario or end of the link-type content.

Furthermore, the application scenario is a scenario configured by an application. Examples of the application used here include a Widget application and a Java (registered trademark) application.

The broadcast scenario is configured by broadcast content received from the broadcast device 15 via the broadcast network 22 and is defined only as a branch scenario. When a branch to the broadcast scenario is caused, broadcast content is displayed on the display section 40.

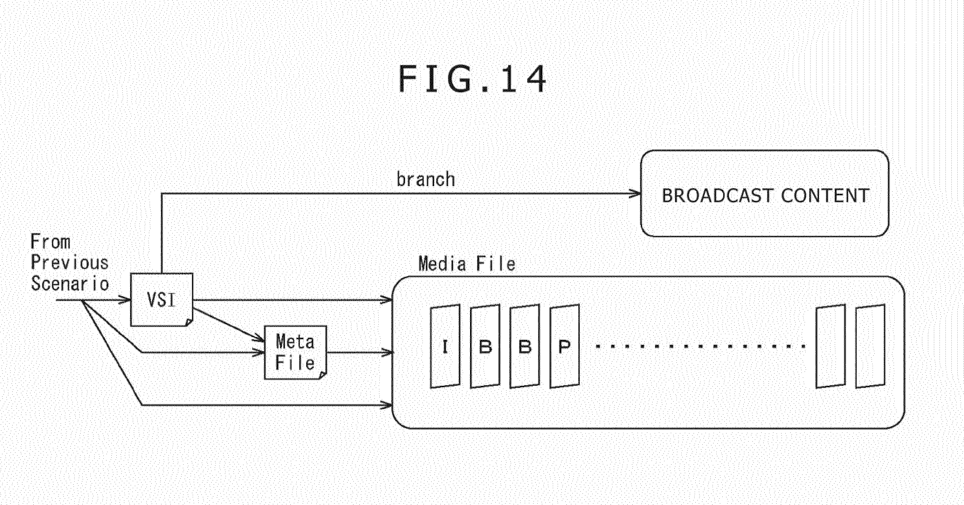

As shown in FIG. 14, the broadcast scenario is defined by the branch element of the VSI information. Specifically, in the VSI information, an URI (Uniform Resource Identifier) relating to a broadcast is described in the location attribute of the entry element of the branch element of FIG. 13 and thereby a specific channel is specified. This URI is started from a scheme such as "dvb" or "arib" and indicates the resource based on a format defined on a scheme-by-scheme basis after a delimiter by a colon for example.

In a branch to the broadcast scenario, it is desirable to get out of the relevant scenario by e.g. end of the link-type content after broadcast content of a specific channel is selected and displayed for example.

### [Kinds of Event]

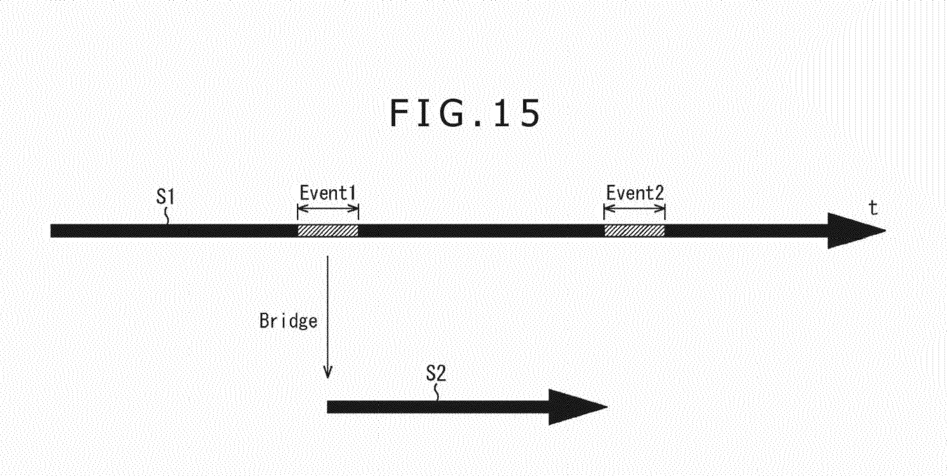

Next, the kinds of event will be described with reference to FIG. 15 to FIG. 20.

The event is classified into five kinds, i.e. time event, space event, time-space event, absolute clock time event, absolute clock time-and-time event. Furthermore, although basically the event is for causing transition to another scenario through operation carried out by the user in a zone defined based on time or space, an auto-event that automatically causes scenario transition irrespective of user operation is also defined.

First, the time event refers to a certain time zone separated by a start point and an end point on the time axis of the scenario. In the VSI, the time event is defined by the start point and the end point. For example, as shown in FIG. 15, if a link to a scenario S2 is set at Event 1, when Enter operation is carried out by the user in reproduction of a scenario S1, it is determined whether or not the timing at which the user has carried out Enter operation is in the event leg specified by the VSI. Then, if it is determined that this timing is in the event leg specified by the VSI, the bridge screen specified by the VSI information is displayed. Then, scenario reproduction of another scenario S2 specified by the user operation is performed.

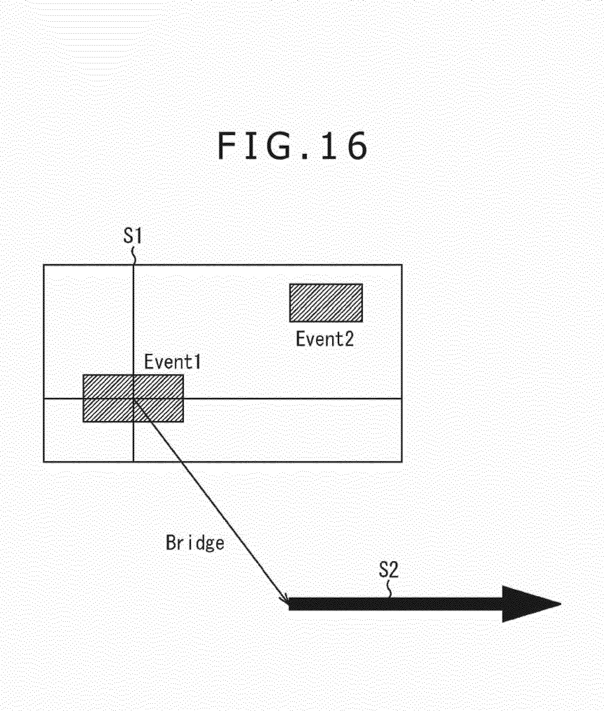

The space event is an event indicated by an area on the screen space of the scenario. In the VSI information, the space event is defined by the upper left coordinates and the lower right coordinates of a rectangular area. The space event is used mainly when the scenario is a still image scenario. Alternatively, in the case of a moving image scenario, when the event is referred to as the space event when this event is valid in the whole time leg of the scenario. For example, as shown in FIG. 16, two events, Event 1 and Event 2, are defined in a still image scenario S1. When Enter operation is carried out by the user in reproduction of this still image scenario S1, it is determined whether or not the cursor position at this timing is in the rectangular area of the event defined by the VSI. Then, if it is determined that the cursor position is in the event area, the bridge screen specified by the VSI is displayed. Then, if a scenario is specified here by user operation, reproduction of another scenario S2 specified by the user operation is started.

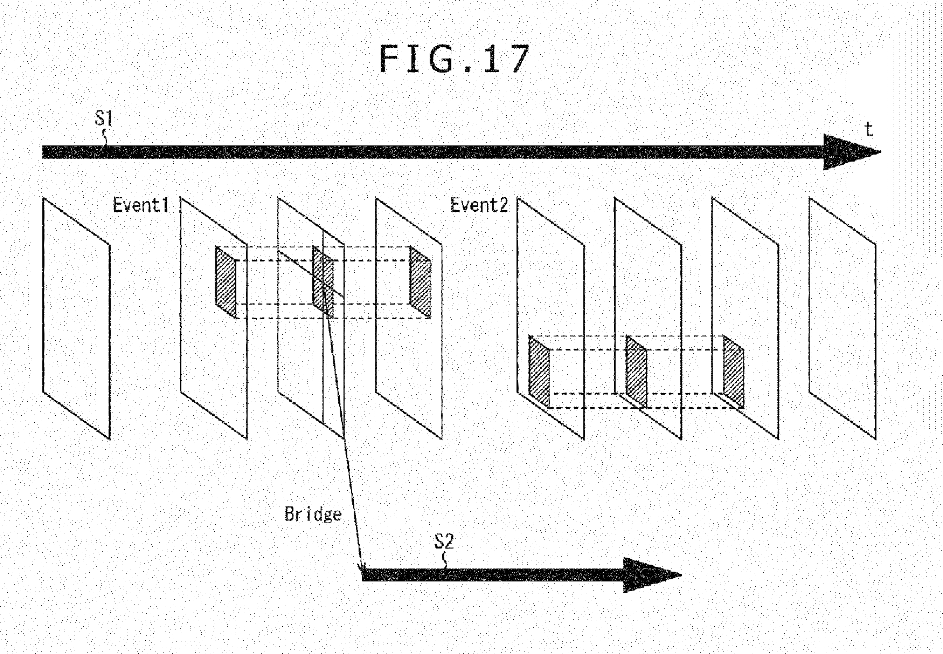

The time-space event is an event indicated by a rectangular area on the screen space in the time on the time axis of the scenario. In the VSI, the time-space event is defined by a combination of a start point and an end point on the time axis and the upper left coordinates and the lower right coordinates of a rectangular area on the screen. The time-space event is valid only in the case of the moving image scenario, which involves the notion of time and space. In FIG. 17, time-space events Event 1 and Event 2 in a scenario S1 are shown. When the user carries out Enter operation in reproduction of this scenario S1, it is determined whether or not the timing at which Enter operation is carried out by the user is in the time range of the event defined by the VSI and it is determined whether or not the cursor position at this timing is in the space range of the event defined by the VSI. Then, if it is determined that they are in the event ranges, the bridge screen specified by the VSI is displayed. Then, if a scenario is specified here by user operation, reproduction of another scenario S2 specified by the user operation is started.

Furthermore, for example, a cursor may be displayed on the display screen when a space event or a time-space event is recognized in the VSI information. Although the method for displaying this cursor depends on the implementation, the configuration is so made that the cursor can move on the screen by an up/down/left/right key or the like of the operation section 34 or an input device such as a remote controller for example.

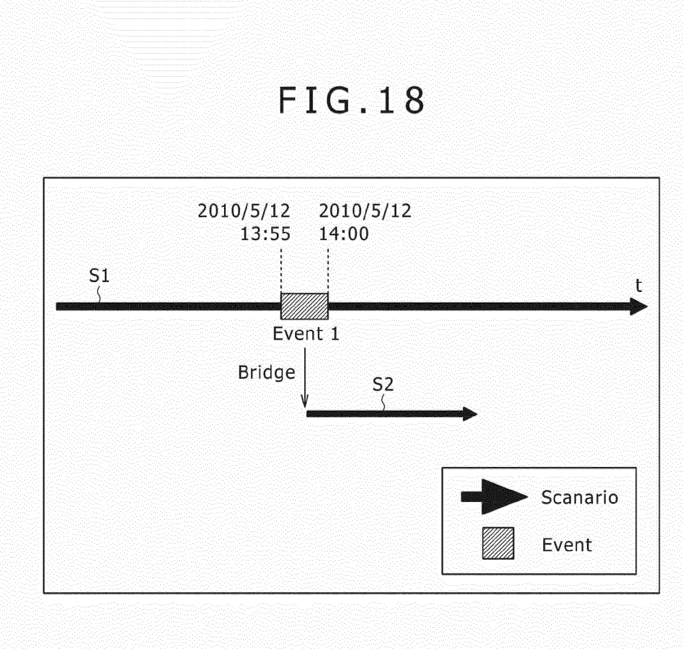

The absolute clock time event is an event that occurs at specific date and time set in advance independently of the progression of the scenario. For example, as shown in FIG. 18, a time-time event Event 1 occurs for five minutes of 13:55 to 14:00 on 2010/5/12 if "2010/5/12 13:55" is set in the start_time attribute of the absolute_timeframe element of the event element of FIG. 11 and "2010/5/12 14:00" is set in the end_time attribute. In this case, when Enter operation is carried out by the user in reproduction of a scenario S1, it is determined whether or not the timing at which the user has carried out Enter operation is in the time range from 2010/5/12 13:55 to 2010/5/12 14:00. If it is determined that the timing is in this time range, a bridge screen is displayed. Then, if a scenario is specified here by user operation, reproduction of another scenario S2 specified by the user operation is started.

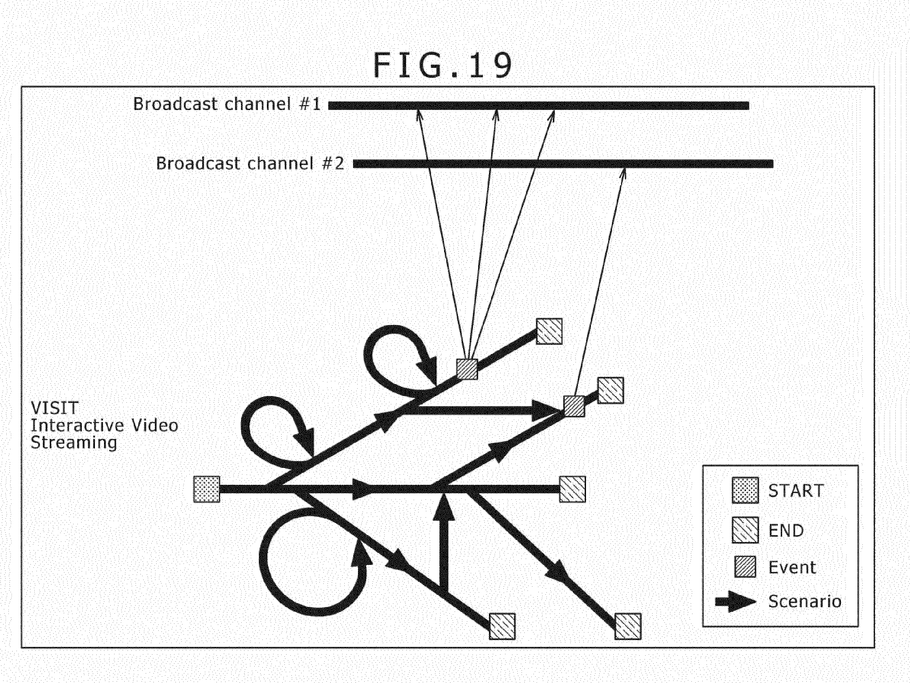

At this time, e.g. a broadcast scenario can be employed as the branch-destination scenario S2, to which the transition from the scenario S1 is caused. Specifically, as shown in FIG. 19, in the case in which an absolute clock time event has occurred in the middle of the scenario, when broadcast content of an arbitrary channel is selected from the bridge screen, display is switched from the link-type content to the broadcast content, so that the broadcast content is displayed. The broadcast content displayed here may be broadcast content of a specific channel broadcast at this switch timing or may be broadcast content broadcast at a certain specific clock time. Furthermore, when it is desired to switch content to broadcast content at the start timing of a certain program, an absolute clock time event is made to occur immediately before the start clock time of the broadcast program. The absolute clock time-time event is an absolute clock time event that occurs only at a time event, which is a predetermined time zone separated by a start point and an end point on the time axis of the scenario. In other words, it can also be said that the absolute clock time-time event is an event that occurs if the AND condition of a time event and an absolute clock time event is satisfied. For example, in the case of FIG. 18, the absolute clock time-time event does not occur if the present time is outside the range of the time zone that is defined by a time event and is separated by a start point and an end point on the time axis of the scenario although being in the time range from 2010/5/12 13:55 to 2010/5/12 14:00. Specifically, e.g. the following scenario can be realized. When the user is present at a certain specific place in a studio in a virtual space and the present time becomes a specific clock time such as a program start clock time, an absolute clock time-time event occurs and the user is led to a theater existing at the back of the studio.

In this manner, by the absolute clock time-time event, an event can be made to occur in a specific scene when the present time becomes a specific clock time, independently of the progression of the scenario. In the above, regarding the time event, the space event, the time-space event, the absolute clock time event, and the absolute clock time-time event, explanation is made mainly about an event for causing transition to another scenario by user operation. However, as the event, not only one to cause transition to another scenario by user operation but also an auto-event that automatically causes transition to another scenario is defined. Next, this auto-event will be described.

The auto-event is an event that automatically causes transition to another scenario irrespective of user operation. If an auto-event is defined by the VSI, when it is recognized that the present time has entered the time range defined by the auto-event, the reproduction of the relevant scenario is automatically stopped irrespective of user operation and a bridge screen is displayed to cause transition to another scenario.

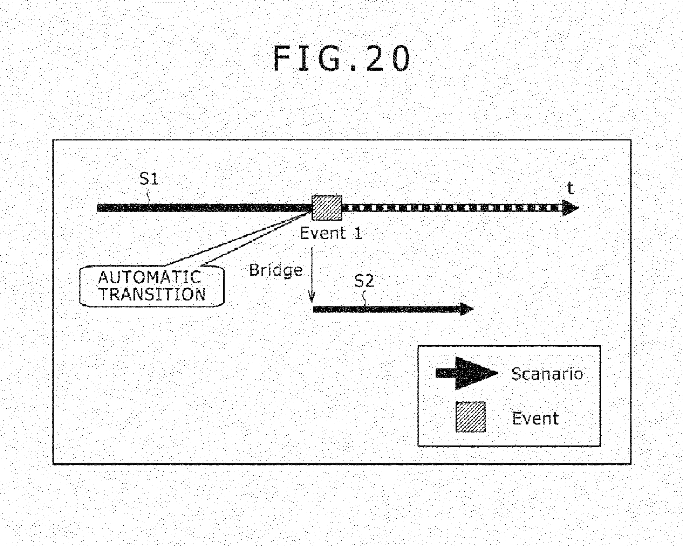

For example, Event 1 as an auto-event is defined in a scenario S1 shown in FIG. 20. When it is recognized that the present time has entered the range of Event 1 defined by the VSI information of the scenario S1 in reproduction of the scenario S1, the bridge screen defined by the VSI information is displayed and thereafter reproduction of a scenario S2 is automatically started.

Such an auto-event Event 1 is used when the moving image after certain timing is desired to be replaced in the scenario S1 for example. Furthermore, for example, a broadcast scenario can be employed as the scenario of the branch destination of the auto-event. In this case, e.g. the following scenario can be realized. Specifically, when the user is present at a certain specific place in a studio in a virtual space and the present time becomes a specific clock time such as a program start clock time, an absolute clock time-time event occurs and furthermore the user is forcibly led to a theater existing at the back of the studio by an auto-event. Thereafter, watching broadcast content is started at the theater at the back.

### [Pattern of Bridge]

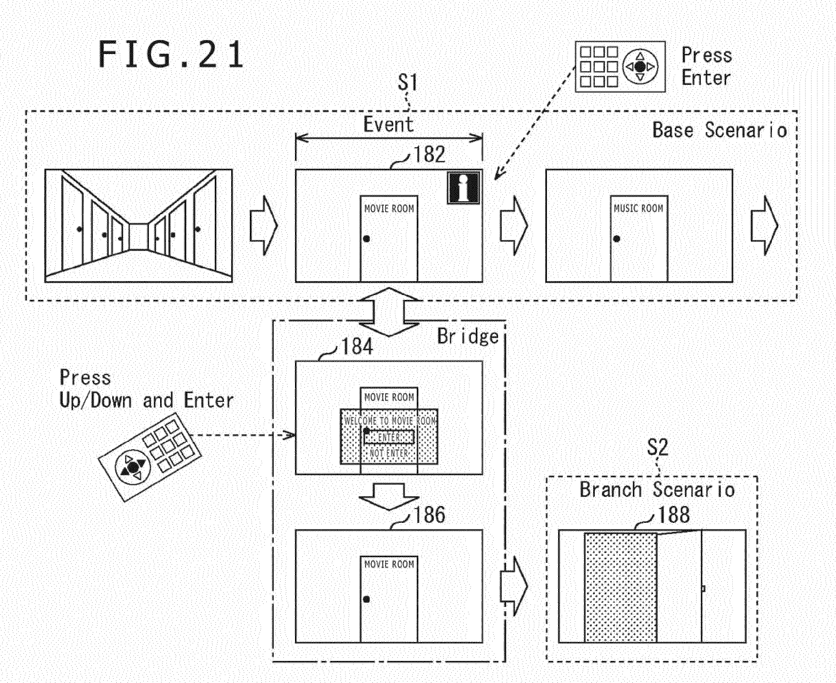

Next, the bridge included in the event element will be described with reference to FIG. 21. FIG. 21 is a diagram showing one example of the bridge.

The bridge is a UI at the time of a scenario branch and the bridge element in the VSI information is defined on an event-by-event basis. Furthermore, the bridge element defines the screen at the time of a scenario branch, provided when the user has carried out input operation in the event range or when the present time has entered the event range at an auto-event.

For example, in the example of FIG. 21, when the user carries out Enter operation in an event screen 182 that is in an event range while the content data of a scenario S1 as the base scenario is being reproduced, a first bridge screen 184 defined by a bridge element is displayed.

In the first bridge screen 184 in FIG. 21, two options, i.e. an option for transition to one branch scenario S2 and an option for return to the original base scenario, are displayed in the screen configuration that is defined by the bridge element and includes an UI of user operation. Here, if the user selects the option for transition to the branch scenario S2 by input operation, a second bridge screen 186 obtained by deleting only the UI of the options is displayed. Then, when a setup for starting reproduction of the branch scenario S2 is completed, the reproduction of the branch scenario S2 is started and a branch scenario start screen 188 is displayed.

### [Operation Example of Content Reproduction System]

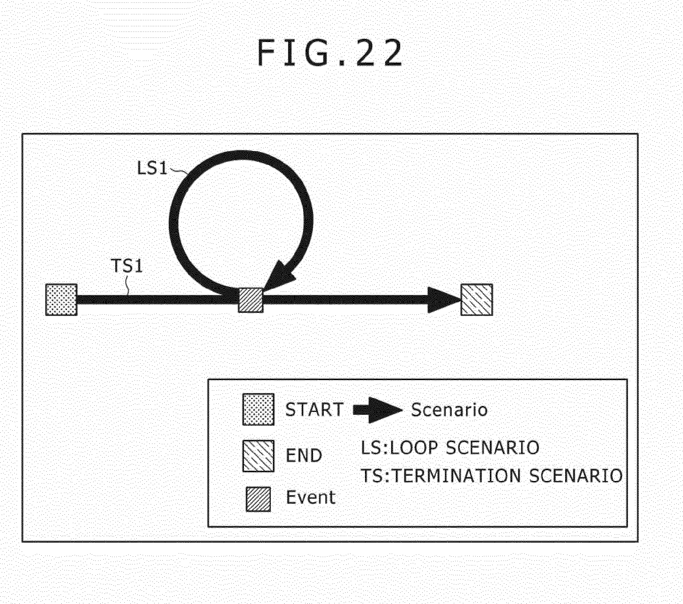

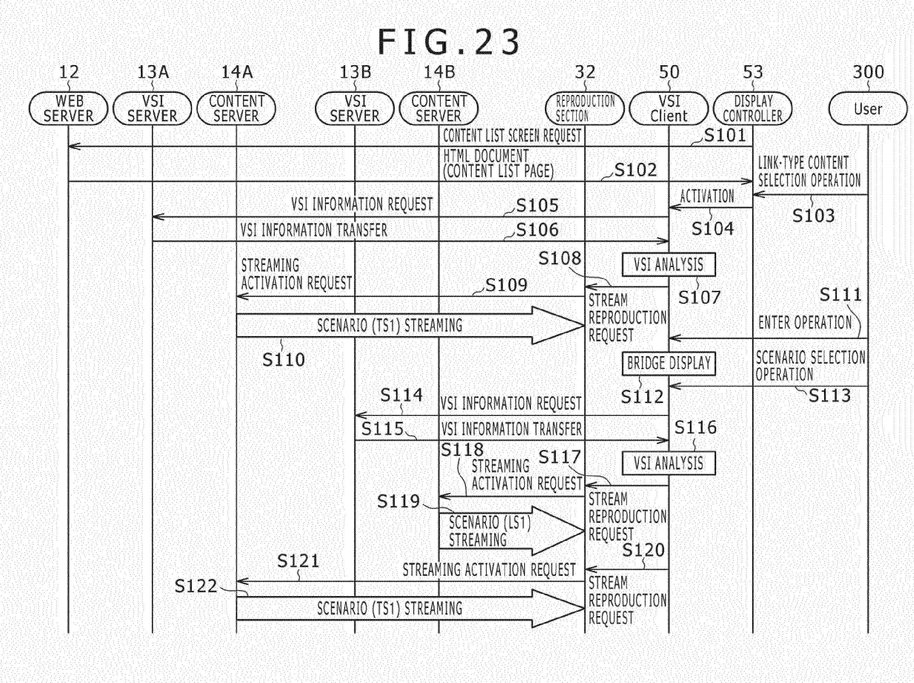

FIG. 22 is an explanatory diagram showing one example of the link-type content. FIG. 23 is a sequence diagram showing one example of reproduction operation of the link-type content of FIG. 22.

The link-type content shown in FIG. 22 has a termination scenario TS1 as the base scenario and a loop scenario LS1 and the loop scenario LS1 branches from Event at certain timing of the termination scenario TS1. The content data and VSI information of the termination scenario TS1 and the content data and VSI information of the loop scenario LS1 are provided from the VSI servers 13 different from each other and the content servers 14 different from each other.

First, the display controller 53 of the content reproduction device 11 requests the Web server 12 to transfer a content list screen (S101). Thereupon, the Web server 12 provides an HTML document including the content list in response to the request from the content reproduction device 11 (S102). Here, if a user 300 who has referenced the provided content list screen carries out operation of selecting the link-type content from the content list (S103), the display controller 53 activates the functions of the VSI client 50 (S104). As described above, the VSI client 50 is a notion including the functions of the control information acquirer 51 and the reproduction controller 52 in FIG. 7.

Then, the VSI client 50 requests a VSI server 13A to transfer the VSI information corresponding to the link-type content specified by the user 300 in response to a request from the display controller 53 (S105). The VSI server 13A requested to transfer the VSI information from the VSI client 50 transfers the VSI information corresponding to the scenario TS1 reproduced first, of the link-type content described in this request message (S106). Then, the VSI client 50 that has received the VSI information analyzes the received VSI information (S107). In the VSI information, information indicating where the content data of the relevant scenario is stored is described. The VSI client 50 inputs, to the reproduction section 32, a stream reproduction request together with the information on the storing place of the content data (S108).

The reproduction section 32 requests a content server 14A to activate streaming based on the information received from the VSI client 50 (S109). The content server 14A starts streaming delivery of the content data corresponding to the specified scenario TS1 in response to the request for the streaming activation (S110). Furthermore, if the user 300 carries out Enter operation in the middle of reproduction of the scenario TS1 by this streaming delivery (S111), the VSI client 50 controls display of a bridge screen based on a bridge element included in the VSI information (S112). Here, in the bridge screen, an option for transition to the loop scenario LS1 as the branch scenario and an option for return to the termination scenario TS1 as the original base scenario are displayed.

If the user 300 carries out operation of selecting the branch scenario to this bridge screen (S113), the VSI client 50 requests a VSI server 13B to transfer the VSI information corresponding to the loop scenario LS1, which is the branch scenario selected by the user 300 (S114). The VSI server 13B transfers the VSI information corresponding to the specified scenario LS1 to the VSI client 50 in response to the message requesting the VSI information (S115).

The VSI client 50 that has received the VSI information analyzes the received VSI information (S116). Then, the VSI client 50 acquires the storing place of the content data of the loop scenario LS1 as the branch scenario from the VSI information, and inputs, to the reproduction section 32, a stream reproduction request together with the information on the storing place of the content data (S117). At this time, the VSI client 50 holds information on the transition timing and the VSI information of the base scenario TS1. The reproduction section 32 transmits a request for streaming activation of the loop scenario LS1 to a content server 14B in response to this reproduction request (S118).

The content server 14B that has received the streaming activation request starts streaming of the specified scenario LS1 (S119). Upon the end of the reproduction of the scenario LS1, the VSI client 50 automatically starts reproduction of the original base scenario TS1. Specifically, by using the information on the transition timing and the VSI information of the base scenario TS1, which are held, the VSI client 50 controls the reproduction section 32 to restart the reproduction of the base scenario TS1 from the transition timing (S120).

In the example of FIG. 23, the VSI client 50 holds the VSI information itself of the base scenario TS1. Therefore, after the end of the reproduction of the loop scenario LS1, which is the branch scenario, the VSI client 50 can restart the reproduction of the base scenario TS1 without acquiring the VSI information again. In contrast, it is also possible that the VSI client 50 holds only information on the storing place of the VSI information depending on the performance of the content reproduction device 11. In this case, the VSI client 50 acquires the VSI information again based on the held information on the storing place and can restart the reproduction of the base scenario TS1.

In accordance with the control by the VSI client 50, the reproduction section 32 requests the content server 14A to activate streaming of content data from the transition timing of the base scenario TS1 (S121). Then, in response to this request, the content server 14A restarts the streaming delivery of the base scenario TS1 (S122).

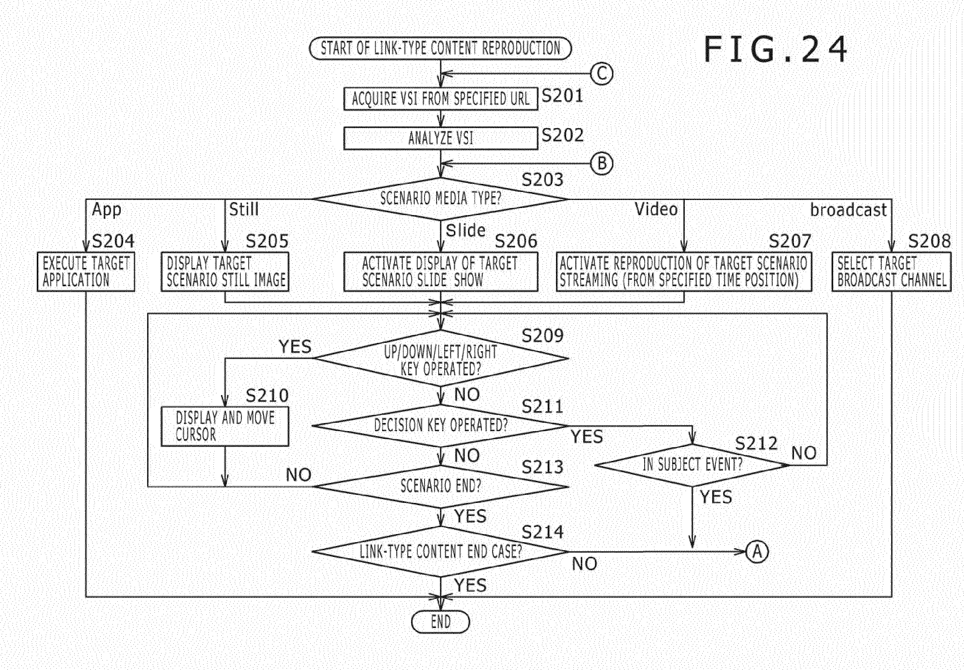

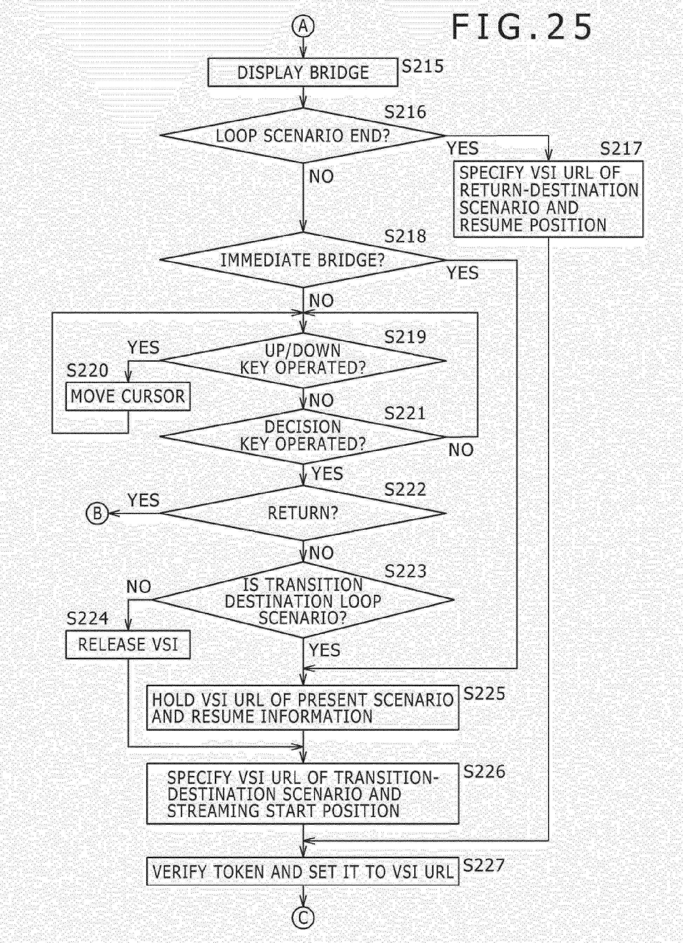

The operation of the content reproduction system 1 for one example of the link-type content shown in FIG. 23 is described above. Next, the operation of the content reproduction device 11 will be described with reference to FIG. 24 and FIG. 25. FIG. 24 and FIG. 25 are flowcharts showing the operation of the content reproduction device.

The operation of the flowchart of FIG. 24 is started by start of reproduction of link-type content by user's operation. When reproduction of the link-type content is ordered, the VSI client 50 of the content reproduction device 11 acquires VSI information from the specified URL (S201). Then, the VSI client 50 analyzes the VSI information acquired by the VSI client 50 (S202).

In a step S203, the VSI client 50 determines the media type of a scenario based on the VSI information. As described above, the media type of the relevant scenario is described in the VSI information. Here, suppose that the media type of the scenario is five kinds, i.e. application (App), still image (Still), slide show (Slide), moving image (Video), and broadcast (Broadcast).

If it is determined in the step S203 that the media type of the scenario is the application, the processing is forwarded to a step S204. In the step S204, the VSI client 50 executes the target application. When the media type of the scenario is the application, the reproduction of the link-type content ends upon the end of the execution of the application because it is defined that the kind of scenario is the termination scenario.

If it is determined in the step S203 that the media type of the scenario is the still image, the processing is forwarded to a step S205. In the step S205, the VSI client 50 displays the target scenario still image.

If it is determined in the step S203 that the media type of the scenario is the slide show, the processing is forwarded to a step S206. In the step S206, the VSI client 50 activates display of the target scenario slide show.

If it is determined in the step S203 that the media type of the scenario is the moving image, the processing is forwarded to a step S207. In the step S207, the VSI client 50 activates reproduction of the target scenario streaming. At this time, the VSI client 50 starts streaming reproduction from the specified time position depending on the situation.

If it is determined in the step S203 that the media type of the scenario is the broadcast, the processing is forwarded to a step S208. In the step S208, the display controller 53 controls the tuner 36 to select the channel corresponding to the URI described in the Location attribute of the entry element of a branch element. Thereby, a video signal and an audio signal corresponding to the channel selected by the tuner 36 are input to the selector 35. Furthermore, the display controller 53 controls the selector 35 to switch the input destination of the selector 35 from the side of the reproduction section 32 to the side of the video decoder 38 and the audio decoder 39. Thereby, video corresponding to broadcast content of the specified channel is displayed on the display section 40 and audio thereof is output from the speaker 41.

As described above, the broadcast scenario is defined only as a branch scenario. Furthermore, in the branch to the broadcast scenario, it is desirable to get out of the relevant scenario by e.g. end of the link-type content after broadcast content of the specific channel is selected and displayed for example.

When reproduction of still image, slide show, or moving image is started in the step S205, S206, or S207, respectively, the processing is forwarded to a step S209. In the step S209, the VSI client 50 determines whether or not up/down/left/right key operation is carried out by the user 300 by using the operation section 34, an input device, or the like. If it is determined in the step S209 that up/down/left/right key operation is carried out, the display controller 53 displays a cursor and moves the cursor position according to the key operation (S210). Upon the end of the processing of the step S210, the processing returns to the step S209 and the processing of this and subsequent steps is executed.

Then, if it is determined in the step S209 that up/down/left/right key operation is not carried out, the processing is forwarded to a step S211. In the step S211, the VSI client 50 determines whether or not decision key operation is carried out. If it is determined in the step S211 that decision key operation is carried out, it is determined whether or not the decision key operation is carried out in the subject event (S212).

As this subject event, the above-described time event, space event, time-space event, absolute clock time event, and absolute clock time-time event correspond thereto. In the case of an auto-event, transition to another scenario is automatically caused irrespective of user operation.

If it is determined in the step S212 that the decision key operation is carried out not in the subject event, the processing returns to the determination of the step S216 again. In contrast, if it is determined in the step S212 that the decision key operation is carried out in the subject event, the processing proceeds to a step S215 in FIG. 25.

On the other hand, if it is determined in the step S211 that the decision key operation is not carried out, subsequently the VSI client 50 determines whether or not the scenario has ended (S213). If it is determined in the step S213 that the scenario has not ended, the processing returns to the determination processing of the step S209. That is, the processing of the steps S209 to S213 is repeated until decision key operation is carried out in the subject event or the reproduction of the scenario ends.

Then, if the VSI client 50 determines in the step S213 that the reproduction of the scenario has ended, the processing is forwarded to a step S214. In the step S214, the VSI client 50 determines whether or not the present case is a link-type content end case. Specifically, the link-type content end case is the case in which the scenario under reproduction is a termination scenario.

If it is determined in the step S214 that the present case is the link-type content end case, the reproduction of the link-type content ends. In contrast, if it is determined in the step S214 that the present case is not the link-type content end case, the processing is forwarded to the step S215 in FIG. 25.

In the step S215, the VSI client 50 displays a bridge. Here, the VSI client 50 determines whether or not the scenario reproduced until this timing is a loop scenario and the reproduction of the loop scenario has ended (S216). If it is determined in the step S216 that this scenario end is the end of a loop scenario, the VSI client 50 specifies the VSI URL of the scenario of the return destination and the resume position (i.e. transition timing) (S217), and the processing is forwarded to a step S227.

On the other hand, if it is determined in the step S216 that this scenario end is not the end of a loop scenario, subsequently the VSI client 50 determines whether or not the bridge displayed in the step S215 is Immediate Bridge (S218). This determination processing is executed based on the bridge element of the bridge displayed in the step S215.

If it is determined in the step S218 that the bridge displayed in the step S215 is Immediate Bridge, the processing is forwarded to a step S225. In contrast, if it is determined in the step S218 that the bridge displayed in the step S215 is not Immediate Bridge, subsequently the VSI client 50 determines whether or not the user has carried out up/down key operation by using the operation section 34 or an input device (S219). Then, if it is determined in the step S219 that up/down key operation is carried out, the display controller 53 moves the cursor according to the up/down key operation (S220). In contrast, if it is determined in the step S219 that up/down key operation is not carried out, the processing is forwarded to a step S221. In the step S221, the VSI client 50 determines whether or not decision key operation is carried out.

If it is determined in the step S221 that decision key operation is not carried out, the processing returns to the processing of the step S219. In contrast, if it is determined in the step S221 that decision key operation is carried out, the processing is forwarded to a step S222. In the step S222, the VSI client 50 determines whether or not the selected option is the option for return to the original scenario. If it is determined in the step S222 that the selected option is the option for return to the original scenario, the processing returns to the operation of the step S203 in FIG. 24. In contrast, if it is determined in the step S222 that the selected option is not the option for return to the original scenario, the processing is forwarded to a step S223. In the step S223, the VSI client 50 determines whether or not the scenario of the transition destination is a loop scenario.

If it is determined in the step S223 that the scenario of the transition destination is not a loop scenario, the VSI client 50 releases VSI information (S224). In contrast, if it is determined in the step S223 that the scenario of the transition destination is a loop scenario, the VSI client 50 holds the VSI URL of the scenario reproduced at the present timing and resume information (S225).

Then, the VSI client 50 specifies the VSI URL of the scenario of the transition destination and the streaming start position, and verifies the token and sets the token to the VSI URL (S227). Upon the end of the step S227, the processing is forwarded to the step S201.

This is the end of the description of the link-type content reproduction processing.

According to the above-described link-type content reproduction processing, content of any of moving image, still image, slide show, application, and broadcast can be displayed depending on the media type of the scenario. Furthermore, when any event of time event, space event, time-space event, absolute clock time event, and absolute clock time-time event occurs, the scenario can be made to transition to another scenario.

The functions of the content reproduction system 1 and the detailed specification of the link-type content are described above. Using this content reproduction system 1 can provide a wide variety of pieces of link-type content in cooperation with broadcast content. Therefore, unprecedented, new content can be provided. So, next, an example of the link-type content that can be provided by applying the content reproduction system 1 will be described.

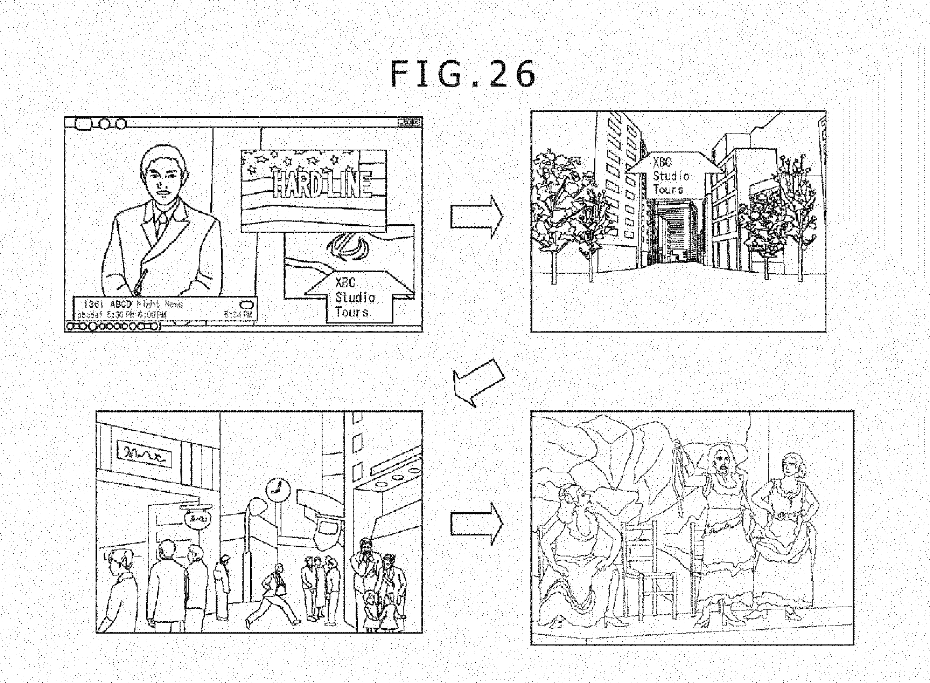

For example, a situation will be assumed in which, as shown in FIG. 26, a scenario S1 that is the main scenario of a virtual space of studio tours provided by a certain news program is started and the user moves in the virtual space. When the user is present at a certain specific place in this virtual space and an absolute clock time event or an absolute clock time-time event occurs, the user is led into a theater from this place. In this theater, a broadcast scenario is started and broadcast content is watched.

As described above, by the absolute clock time event or the absolute clock time-time event, an event can be made to occur at specific date and time set in advance and switch to broadcast content can be made in transition to another scenario. Thus, link-type content having a wide variety of scenarios can be provided.

In the above description, explanation is made based on the assumption that content data is any of moving image content, still image content, slide show content, application content, and broadcast content. However, the content data is not limited thereto and may include audio content of music, lecture, radio program, or the like for example.

### [Configuration Example of Computer]

By the way, the above-described series of processing can be executed by hardware and can be executed also by software. In the case of executing the series of processing by software, a program configuring the software is installed from a program recording medium into a computer incorporated in dedicated hardware or e.g. a general-purpose personal computer allowed to execute various kinds of functions by installation of various kinds of programs into it.

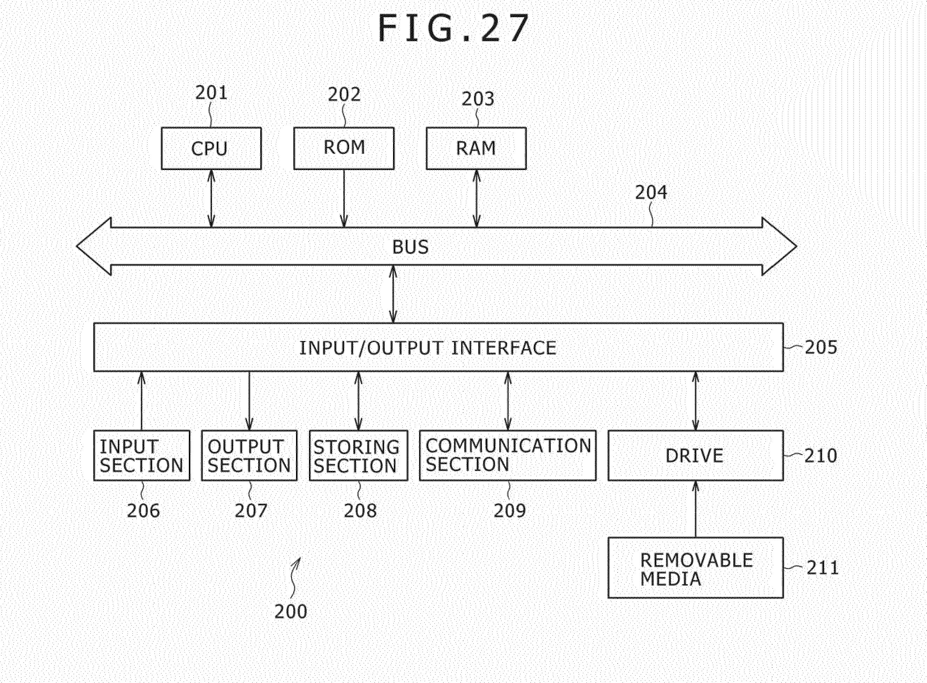

FIG. 27 is a diagram showing a configuration example of the hardware of a computer that executes the above-described series of processing by a program.

In this computer 200, a CPU (Central Processing Unit) 201, a ROM (Read Only Memory) 202, and a RAM (Random Access Memory) 203 are connected to each other by a bus 204.

To the bus 204, an input/output interface 205 is further connected. To the input/output interface 205, the following sections are connected: an input section 206 formed of keyboard, mouse, microphone, etc., an output section 207 formed of display, speaker, etc., a storing section 208 formed of hard disk, non-volatile memory, etc., a communication section 209 formed of a network interface, etc., and a drive 210 that drives removable media 211 such as magnetic disc, optical disc, magneto-optical disc, or semiconductor memory.

In the computer configured in the above-described manner, the CPU 201 loads a program stored in the storing section 208 into the RAM 203 via the input/output interface 205 and the bus 204 and runs it for example, and thereby the above-described series of processing is executed.

The program run by the computer may be a program for which processing is executed in a time-series manner along the order described in the present specification or may be a program for which processing is executed in parallel or at the necessary timing such as when calling is performed.

Furthermore, the program may be one processed by one computer or may be one subjected to distributed processing by plural computers. Moreover, the program may be one transferred to a faraway computer and run.

In the present specification, the system represents the whole of a device configured by plural devices.

Furthermore, embodiments of the present technique are not limited to the above-described embodiment and various changes are possible in such a range as not to depart from the gist of the present technique. Moreover, it is also possible for the present technique to have the following configurations.

### [1]

An information processing device including
a content acquirer that acquires link-type content including a plurality of scenarios composed of content data and control information for controlling reproduction of the content data,
a control information acquirer that acquires the control information, and
a reproduction controller that controls reproduction of the link-type content by reproducing the content data in accordance with the control information, wherein
the control information acquirer acquires the control information including an absolute clock time event that occurs at specific date and time on a time axis of a scenario as an event for transition from a present scenario to another scenario, and
the reproduction controller causes the present scenario to transition to another scenario if the absolute clock time event occurs.

### [2]

The information processing device according to [1], wherein
the control information acquirer acquires the control information including, as the event, the absolute clock time event that occurs only at a time event that is a predetermined time zone separated by a start point and an end point on the time axis of the scenario, and the reproduction controller causes the present scenario to transition to another scenario if the absolute clock time event occurs in the predetermined time zone.

### [3]

The information processing device according to [1] or [2], further including
a receiver that receives broadcast content broadcast via a broadcast network, and
a display controller that switches content for displaying another scenario to which transition from the present scenario is caused from the link-type content to the broadcast content if the absolute clock time event occurs.

### [4]

The information processing device according to [3], wherein
the control information acquirer acquires the control information including information for identifying the broadcast content, and the display controller displays the broadcast content received in accordance with the control information.

### [5]

The information processing device according to any of [1] to [4], wherein
if the absolute clock time event occurs, the reproduction controller forcibly causes transition from the present scenario to another scenario reproduced at specific date and time.

### [6]

The information processing device according to any of [1] to [4], wherein
if the absolute clock time event occurs, the reproduction controller causes transition from the present scenario to another scenario reproduced at specific date and time when an order is made by user operation.

### [7]

An information processing method including the steps of, by an information processing device,
acquiring link-type content including a plurality of scenarios composed of content data and control information for controlling reproduction of the content data,
acquiring the control information,
controlling reproduction of the link-type content by reproducing the content data in accordance with the control information,
acquiring the control information including an absolute clock time event that occurs at specific date and time on a time axis of a scenario as an event for transition from a present scenario to another scenario, and
causing the present scenario to transition to another scenario if the absolute clock time event occurs.

### [8]

A program for control of an information processing device, the program causing a computer of the information processing device to execute processing including the steps of
acquiring link-type content including a plurality of scenarios composed of content data and control information for controlling reproduction of the content data,
acquiring the control information,
controlling reproduction of the link-type content by reproducing the content data in accordance with the control information,
acquiring the control information including an absolute clock time event that occurs at specific date and time on a time axis of a scenario as an event for transition from a present scenario to another scenario, and
causing the present scenario to transition to another scenario if the absolute clock time event occurs.

### [Reference Signs List]

- 1: Content reproduction system
- 11: Content reproduction device
- 12: Web server
- 13: VSI server
- 14: Content server
- 15: Broadcast device
- 21: Communication network
- 22: Broadcast network
- 31: Communication I/F
- 32: Reproduction section
- 33: Control section
- 34: Operation section
- 35: Selector
- 36: Tuner
- 37: Demultiplexer
- 38: Video decoder
- 39: Audio decoder
- 40: Display section
- 41: Speaker
- 50: VSI client
- 51: Control information acquirer
- 52: Reproduction controller
- 53: Display controller
- 200: Computer
- 201: CPU

## Claims

1. An information processing device comprising:
a content acquirer that acquires link-type content including a plurality of scenarios composed of content data and control information for controlling reproduction of the content data;
a control information acquirer that acquires the control information; and
a reproduction controller that controls reproduction of the link-type content by reproducing the content data in accordance with the control information, wherein
the control information acquirer acquires the control information including an absolute clock time event that occurs at specific date and time on a time axis of a scenario as an event for transition from a present scenario to another scenario, and
the reproduction controller causes the present scenario to transition to another scenario if the absolute clock time event occurs.

2. The information processing device according to claim 1, wherein the control information acquirer acquires the control information including, as the event, the absolute clock time event that occurs only at a time event that is a predetermined time zone separated by a start point and an end point on the time axis of the scenario, and the reproduction controller causes the present scenario to transition to another scenario if the absolute clock time event occurs in the predetermined time zone.

3. The information processing device according to claim 2, further comprising:
a receiver that receives broadcast content broadcast via a broadcast network; and
a display controller that switches content for displaying another scenario to which transition from the present scenario is caused from the link-type content to the broadcast content if the absolute clock time event occurs.

4. The information processing device according to claim 3, wherein
the control information acquirer acquires the control information including information for identifying the broadcast content, and
the display controller displays the broadcast content received in accordance with the control information.

5. The information processing device according to claim 2, wherein
if the absolute clock time event occurs, the reproduction controller forcibly causes transition from the present scenario to another scenario.

6. The information processing device according to claim 2, wherein
if the absolute clock time event occurs, the reproduction controller causes transition from the present scenario to another scenario when an order is made by user operation.

7. An information processing method comprising the steps of, by an information processing device:
acquiring link-type content including a plurality of scenarios composed of content data and control information for controlling reproduction of the content data;
acquiring the control information;
controlling reproduction of the link-type content by reproducing the content data in accordance with the control information;
acquiring the control information including an absolute clock time event that occurs at specific date and time on a time axis of a scenario as an event for transition from a present scenario to another scenario; and
causing the present scenario to transition to another scenario if the absolute clock time event occurs.

8. A program for control of an information processing device, the program causing a computer of the information processing device to execute processing comprising the steps of:
acquiring link-type content including a plurality of scenarios composed of content data and control information for controlling reproduction of the content data;
acquiring the control information;
controlling reproduction of the link-type content by reproducing the content data in accordance with the control information;
acquiring the control information including an absolute clock time event that occurs at specific date and time on a time axis of a scenario as an event for transition from a present scenario to another scenario; and
causing the present scenario to transition to another scenario if the absolute clock time event occurs.
